# EUROPEAN PATENT SPECIFICATION

(11) **EP 0 484 995 B1**
(45) Date of publication and mention of the grant of the patent: **02.01.1997**
(21) Application number: 91202687.9
(22) Date of filing: 17.10.1991
(51) Int. Cl.: B60K 31/00, G08G 1/16, B60T 7/12

(54) **Method of controlling the speed of a vehicle**
Verfahren zur Steuerung der Geschwindigkeit eines Fahrzeugs
Méthode de commande de la vitesse d'un véhicule

(30) Priority: 05.11.1990 US 611267
(43) Date of publication of application: 13.05.1992
(73) Proprietor: GENERAL MOTORS CORPORATION, Detroit Michigan 48202 (US)
(72) Inventor: Deering, Richard Karl, Mt Clemens, Michigan 48044 (US)
(74) Representative: Denton, Michael John

(56) References cited:
- EP-A- 0 145 989
- DE-A- 2 824 015
- REGELUNGSTECHNIK vol. 26, no. 9, September 1978, MUNCHEN DE pages 300 - 306 R. SWIK 'Auslegung einer digitalen Abstandsregelung f r Kfz.'

## Description

This invention relates to a method of controlling the speed of a vehicle.

Vehicle cruise control systems are popular equipment on conventional vehicles. Recently, adaptive cruise control systems have been proposed, where, in addition to conventional factors, external factors are considered in the control of vehicle speed. Known automatic systems attempt to maintain a desired speed, set by the driver, but are capable of detecting obstacles in front of the vehicle, and are capable of adapting the vehicle speed in response thereto.

Commonly, these adaptive systems adjust vehicle speed in response to detected obstacles in such a manner as to cause speed perturbations perceptible to the driver of the vehicle. These perturbations may affect driver comfort or driver confidence in the adaptive speed control system, with the result that they can affect the commercial value of such systems.

Conventional systems also prescribe control based on presumed driver capabilities, such that all drivers alike must succumb to the deceleration rate, brake reaction time and minimum following distance allowed by the system, if any. These parameter settings may not be consistent with the driver's preferred driving style, undermining the desirability of using the adaptive speed control system. A method in accordance with the preamble of Claim 1 is disclosed in EP-A-0145989.

The present invention seeks to provide an improved method of controlling the speed of a vehicle.

A method of controlling the speed of a vehicle in accordance with the present invention is characterised over EP-A-0145989 by the features specified in the characterising portion of Claim 1.

The invention can overcome the shortcomings of the prior art systems by carefully controlling the vehicle speed at all times when obstacles are present, including during control transitions, with a primary objective of minimizing speed perturbations that may be unpleasant to the driver. Additionally, the method can compensate for driver response time by allowing the driver to introduce a preferred reaction time which affects not only minimum desired inter-vehicle spacing, but also braking response time and a maximum allowable deceleration value.

In general, this method can determine a desired following distance or spacing between the controlled vehicle and vehicles ahead of the controlled vehicle. This distance may be based on a driver selected "spacing input". If a vehicle detected ahead of the subject vehicle is outside the desired distance, the subject vehicle speed can be controlled with respect to the preceding vehicle in a first mode, in a manner common in the art.

However, if the actual spacing is less than the desired spacing, the method can operate in a second control mode and calculate a deceleration rate by which to decelerate the vehicle, such that as the distance to the preceding vehicle approaches a driver-influenced minimum distance, the controlled vehicle speed will approach the speed of the preceding vehicle. Upon reaching a predetermined minimum deceleration value, the vehicle may be further carefully decelerated at that predetermined value, which may be the level road coasting rate for that vehicle, allowing the inter-vehicle spacing to increase until that spacing reaches the desired spacing, at which time a conventional speed control mode can come into effect to maintain the vehicle at or near the desired spacing.

Unlike the prior systems, this invention can provide smooth changes between control modes, placing importance on minimizing control perturbations. The rate of deceleration can also be continually controlled for accuracy and repeatability; and can be set to provide a beneficial trade-off between smoothness and precise operation. Additionally, the rate of deceleration, the braking harshness and response and the minimum possible spacing can be tailored to the individual driver's driving style.

According to another aspect of the present invention, there is provided a method of controlling the speed of a vehicle as specified in claim 6.

An embodiment of the present invention is described below, by way of illustration only, with reference to the accompanying drawings, in which:-
Figure 1 is a diagram illustrating the relationship between range and speed for an embodiment using two control modes;
Figure 2 is a diagram of an embodiment of electronic controller for implementing the control modes of Figure 1;
Figures 3 to 6 and 8 are computer flow charts illustrating the steps carried out by the electronic controller of Figure 2; and
Figure 7 is a graph illustrating the basic relationship between a driver's desired spacing and minimum following distance, braking reaction time, and maximum allowable deceleration value.

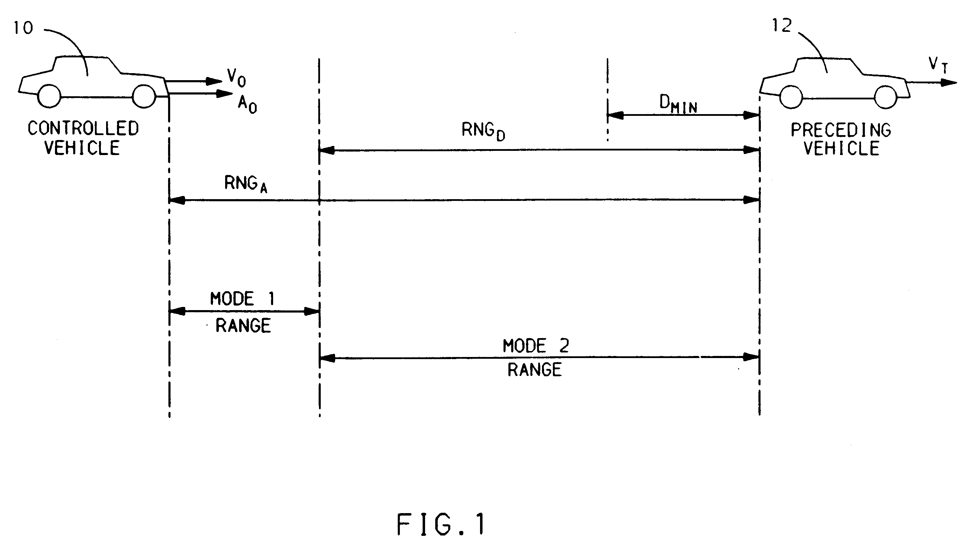

Referring to Figure 1, when the adaptive speed control system of an automotive vehicle 10 (hereinafter referred to as the controlled vehicle), which is travelling at a speed Vₒ and which has an acceleration Aₒ, detects a preceding vehicle 12 travelling at a speed V_{T} it ascertains the speed of the preceding vehicle 12, the distance between the two vehicles (range), and the rate of change of this distance (range rate).

Upon sensing the preceding vehicle 12, the control system calculates a desired range RNG_{D} at which the two vehicles 10, 12 should be maintained. If the actual range RNG_{A} of the two vehicles exceeds RNG_{D}, the range is classified as being within mode 1, shown in Figure 1, and a mode 1 speed control is activated. Alternatively, if RNG_{A} is less than RNG_{D}, the range is classified as being within mode 2, also shown in Figure 1, and a mode 2 speed control is activated. In order to minimize the possibility of the control system oscillating between modes 1 and 2, a hysteresis band (not shown) is provided in a conventional manner around the transition point RNG_{D}. Accordingly, to make a transition from mode 2 to mode 1, RNG_{A} must exceed RNG_{D} by an amount determined by the extent of the hysteresis band.

In general, when the control system is operating in mode 1, it controls the speed of the controlled vehicle 10 in a conventional manner, such that the vehicle 10 approaches the desired range RNG_{D}, but does not come within it. In mode 2 the control system establishes, on the basis of the driver's entered desired spacing, an absolute minimum distance, shown in Figure 1 as D_{MIN}, and controls the deceleration A_{D} of the vehicle 10 in such a manner that as range RNG_{A} approaches D_{MIN}, the speed Vₒ of the controlled vehicle 10 approaches the speed V_{T} of the preceding vehicle 12. When A_{D}, which decreases in magnitude as Vₒ approaches V_{T}, reaches a predetermined minimum deceleration value, it is held at that value until the actual range RNG_{A} between the two vehicles 10, 12 is approximately equal to the desired range RNG_{D}. Control in mode 1 then operates to control the speed of the controlled vehicle 10.

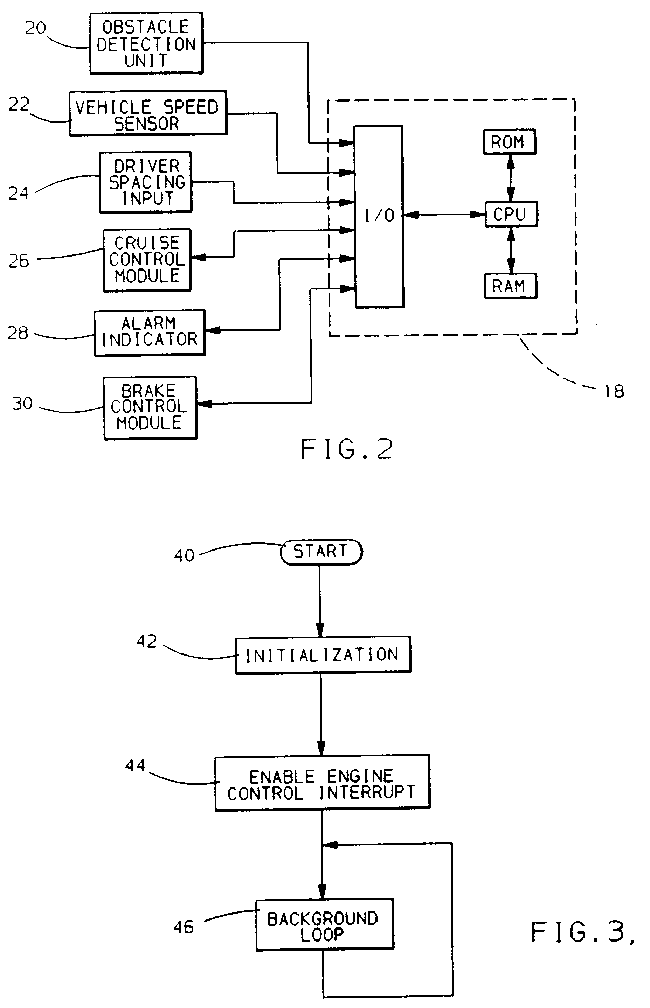

Referring to Figure 2, a conventional obstacle detection unit 20, such as a common radar system, is mounted in a forward position in the controlled vehicle 10, such that it is capable of detecting obstacles ahead of the vehicle 10, in particular preceding vehicles 12 in the path of the controlled vehicle 10. Information from the detection system 20 is transmitted to an adaptive speed controller 18, such that, if a preceding vehicle 12 is present, the controller 18 is provided with the travelling speed of that vehicle V_{T}, the range or inter-vehicle spacing RNG_{A}, and the rate of change of that spacing.

A conventional vehicle speed sensor 22 transmits the travelling speed Vₒ of the controlled vehicle 10 to the controller 18. The controller may use this information to calculate the acceleration Aₒ of the controlled vehicle 10.

A driver "spacing input" 24 is provided, which may be a dial located in proximity to the vehicle instrument panel (not shown), enables the driver may influence the speed control system according to his desired driving style. The spacing input set by the driver in this manner affects the desired inter-vehicle spacing RNG_{D}, the minimum allowable spacing D_{MIN}, the maximum tolerable vehicle deceleration value, and the vehicle braking reaction time T_{RB}. The manner in which these parameters are affected is be described below.

In general, the adaptive speed controller 18, when the vehicle conventional cruise control module 26 is active, attempts to classify the relationship between the controlled vehicle 10 and a sensed preceding vehicle 12 (if present) into one of two modes, mode 1 and mode 2, corresponding to two speed control strategies. Upon such classification, the appropriate control strategy is executed, and an appropriate control command is issued such as a braking command to a brake control module 30, or as a revised cruise control set speed to the cruise control module 26.

In this embodiment, the adaptive speed controller 18 may include any conventional microprocessing unit, such as a Motorola MC68HC11 single chip micro-controller.

The type of control command issued corresponds to the level of control intervention necessary under the detected circumstances. For example, in mode 1, only subtle control of vehicle speed is necessary such that the desired vehicle speed may be attained by simply adjusting the cruise control set speed. The cruise control module 26 may then control throttle position in a conventional manner on the basis of the adjusted desired speed. However, in mode 2, greater control is required to control vehicle speed appropriately, such that cutting of power to the vehicle engine or braking may be required.

An alarm indicator 28 is provided to warn the driver when conditions require his intervention, such as a need for a deceleration that exceeds a predetermined maximum deceleration possible with the system as set. However, in other embodiments, the driver may also be notified of less severe situations, such as when the controlled vehicle 10 moves closer to the preceding vehicle 12 than the desired following distance or simply when the system detects a preceding vehicle 12.

The cruise control module 26 is connected to the speed controller 18 and communicates to the controller 18 a driver set speed V_{SET} which is the driver's requested cruising speed, and a cruise enable signal, indicating whether cruise control is currently active. This request is within the driver's control, in that the driver may request cruise control, cancel that request, or temporarily suspend that request in a conventional manner, and thereby deactivate cruise, so as to disable the control by the controller 18. For example, the driver may enable cruise control by setting a switch located in proximity to the instrument panel. He may cancel the cruise control by resetting that switch, or by interrupting power to the cruise control system 26. Finally, he may temporarily suspend cruise control by engaging the vehicle brakes, or by requesting a change in the set speed. In this embodiment, when conventional cruise control has been disabled, adaptive speed control also becomes inactive.

The adaptive speed control module 18, if active, transmits a set speed to the cruise control module 26. This speed will be the same as the driver set speed if there is no preceding vehicle 12 present or if the desired speed determined by the adaptive speed control system 18 exceeds the driver set speed. Otherwise, the transmitted set speed will be some value less than the driver set speed.

The adaptive speed control module 26 also sets a "brakes enabled" flag when braking is required. The cruise control module 26 has access to this flag, and disables cruise control when the flag shows the brakes to be engaged. When cruise control is disabled in this manner, the throttle blade is automatically closed or is allowed to close such that the effect of the brakes, which will be trying to decelerate the vehicle, is not opposed by engine power, i.e. via an open throttle. When the system determines that the brakes are no longer needed, the brakes enabled flag is deactivated, such that normal cruise control may resume.

Referring to Figure 3, when power is applied to the system, such as when the vehicle ignition is turned to its "on" position, the routine starts at step 40, and proceeds to step 42 where the system is initialized. At this step data constants are loaded from ROM locations to RAM locations, and counters, pointers and flags are initialized. The routine then proceeds to step 44, where interrupts used in the operation of the routine are enabled.

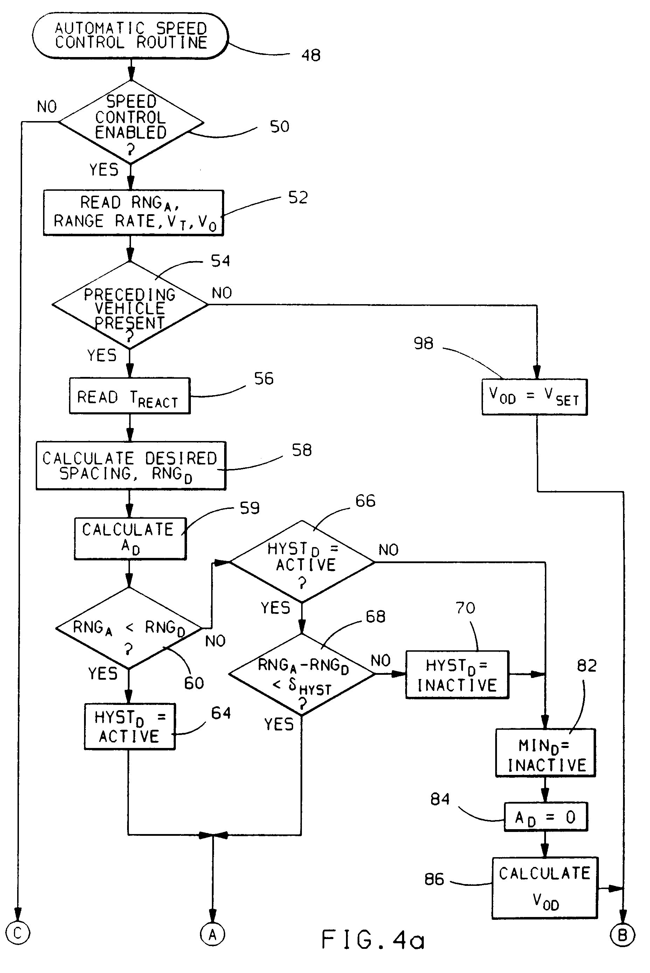

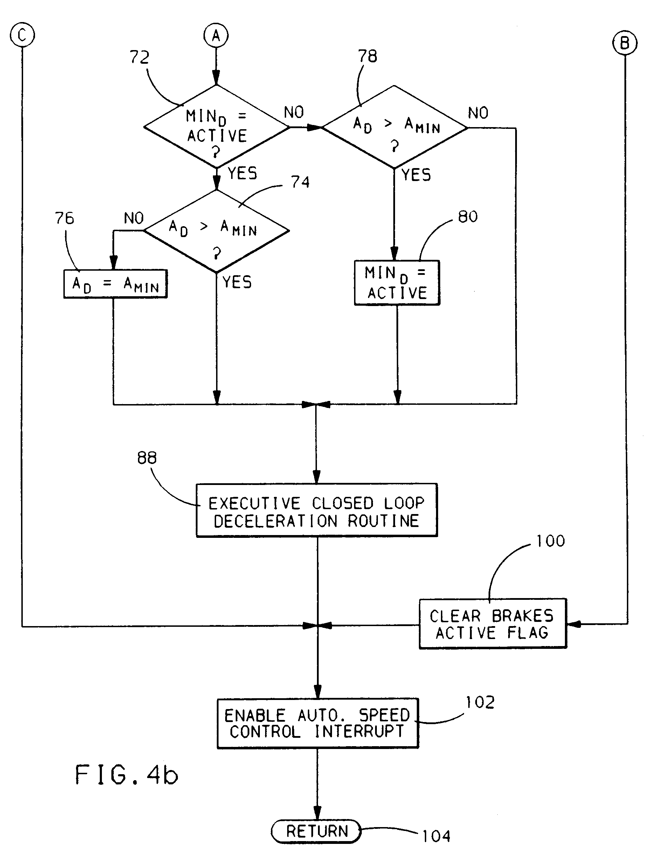

Next, the routine proceeds to a background loop at step 46, which is continuously repeated while the system is operating. In this loop, system maintenance and diagnostic routines may be executed. This loop is interrupted by the main control routine illustrated in Figure 4. In this embodiment, an interrupt is programmed to occur every 125 milliseconds.

Referring to Figure 4, the processor 18, on servicing the speed control interrupt proceeds to step 48. In general, when the driver has requested cruise control, this interrupt routine examines vehicle operating conditions and the vehicle's relationship to any preceding vehicle 12, if present, and based on that examination either determines a new vehicle set speed, which is communicated to the cruise control module 26, or determines that braking is necessary, at which time cruise control is temporarily disabled, and a brake pressure command is transmitted to the conventional brake control module 30. The brake control module 30 in this embodiment is a common vehicle traction controller. If no preceding vehicle 12 is detected, the routine in this embodiment simply passes the driver set speed through to the cruise control module 26, for use in a conventional cruise control algorithm.

Specifically, the routine proceeds from step 48 to step 50, where a check is made to determine whether the driver has requested cruise control. If no such request has been made, or if, in a conventional manner, the cruise has been disabled for example by the driver applying the brakes, or by the driver turning off cruise control via a conventional cruise control set switch, this routine is left through step 102, which simply resets the interrupt service routine to cause it to occur again at the predetermined time (125 milliseconds). After resetting the interrupt at step 102, the routine proceeds to step 104, where control is returned to the background loop of Figure 3.

If, at step 50, it is determined that the driver has requested cruise control, the routine proceeds to step 52, where the general parameters used in this embodiment are read and stored in RAM. In this embodiment, these parameters are determined using the conventional obstacle detection system 20 of Figure 2, which periodically scans a predetermined area ahead of the controlled vehicle for obstacles such as a preceding vehicle 12. From the reflection of the signal used in scanning, the detection system calculates, even in the absence of an obstacle, the range or distance RNG_{A} to the assumed obstacle, the rate that the range is changing with respect to a predetermined period, and the velocity V_{T} of the assumed obstacle. Additionally, at this step the velocity Vₒ of the controlled vehicle 10 is read using the vehicle speed sensor 22 of Figure 2, and is stored in RAM.

The routine then proceeds to step 54, to check whether in fact there is an obstacle ahead of the vehicle 10, such as a preceding vehicle 12. This check may be made by examining the range value received at step 52, such that if this value is excessively large, it is assumed that no preceding obstacle is currently present. A detected obstacle may be assumed to be a preceding vehicle 12. The characteristics of the preceding vehicle 12 then becomes a factor with which the speed control of the controlled vehicle 10 may be changed. Although this embodiment assumes a preceding obstacle may be a vehicle 12, it will, of course, apply to any detected obstacle in the path of the controlled vehicle 10.

If no preceding obstacle is detected, the routine proceeds to step 98, where the speed command V_{OD} to be returned to the cruise control module 26 upon completion of this routine is set to the original driver set speed, which is the speed the driver sets when cruise control is requested. Thus, this routine does not alter the driver set speed when no preceding obstacle is detected.

The routine then proceeds to step 100, where a brakes active flag is cleared. This flag is set whenever vehicle braking is required, and is periodically read by the cruise control module 26. The module 26 will disable the throttle when the flag is set, allowing the throttle to close before braking is initiated. In this manner, the possibility of the brakes having to work against the effect of the throttle is reduced.

After the brakes active flag is cleared, the routine proceeds to step 102, where the interrupt used to trigger operation of this routine is enabled, as previously described. Finally, the routine returns to the background loop of Figure 3, via step 104.

Returning to step 54, if a preceding obstacle is present (which is assumed by this embodiment to be a preceding vehicle 12), the routine then moves to step 56 and reads T_{REACT} from system memory. T_{REACT} is a predetermined driver reaction time which is used as a factor in determining a desired distance RNG_{D} by which the controlled vehicle 10 is to follow the detected preceding vehicle 12.

The routine now has adequate information to calculate the desired following distance RNG_{D}, at step 58. RNG_{D} is a function of the relative speed of the two vehicles, the range of the two vehicles, and of the rate of change of this range. Additionally, RNG_{D} is a function of T_{REACT}, a predetermined value indicating the driver reaction time. If the driver reaction time is small, a smaller following distance may be allowed, whereas a larger reaction time will result in the adoption of a larger following distance.

Upon calculation of RNG_{D}, the routine proceeds to step 59, where a sub-routine to calculate A_{D} is executed. This sub-routine determines the deceleration value A_{D} necessary to decelerate the vehicle 10 when the controlled vehicle 10 is within a range requiring control in mode 2, to a predetermined final condition, that is a minimum acceptable following distance and/or vehicle speed Vₒ. This sub-routine may be executed for control in either mode 1 or mode 2, to predict whether conditions are such that when mode 2 is adopted, the predetermined final condition can be met. In the case that the maximum allowable vehicle deceleration can not meet the final condition, an alarm will be activated to warn the driver of the failure or the prospective failure to meet this condition.

After executing the routine to calculate A_{D}, the actual range RNG_{A} is compared to the desired range RNG_{D} at step 60. If RNG_{A} is less than RNG_{D}, mode 2 is activated, and the controlled vehicle 10 will be decelerated on the basis of the value A_{D}, calculated at step 59. To carry out these steps, the routine moves to step 64, where a hysteresis active flag is set. The hysteresis active flag is set whenever the control routine is in mode 2, such that a hysteresis factor δ_{HYST} will be added to the mode 2 to mode 1 transition distance in a conventional manner to prevent control oscillations when RNG_{A} is oscillating around RNG_{D}.

In general, this algorithm switches between mode 1 and mode 2 on the basis of the difference between the actual inter-vehicle range RNG_{A} and the desired inter-vehicle range RNG_{D}, as is illustrated in Figure 1. By adding δ_{HYST} to the transition distance while in mode 2, the transition will not be made to mode 1 until the actual spacing exceeds the desired spacing plus δ_{HYST}. Once in mode 1, the hysteresis factor is not used, such that mode 2 will be entered on the normal transition point.

Returning to step 60, if RNG_{A} is greater than or equal to RNG_{D}, the routine proceeds to step 66, where the hysteresis flag is checked. The difference between desired and actual range, examined at step 60, indicates that control may be in mode 1. However, if the routine was last in mode 2, such that distance hysteresis is active, an additional check must be made before changing to mode 1. This check, at step 68, requires the difference between the actual and desired range to exceed the hysteresis factor δ_{HYST}, or in other words, RNG_{A} must exceed the sum of RNG_{D} and δ_{HYST}.

If the actual range does exceed this sum, the routine clears the distance hysteresis active flag at step 70. Once this flag is cleared, or if hysteresis was not active at step 66, the routine proceeds to step 82, where a minimum deceleration function MIN_{D} is deactivated. MIN_{D} is a function that limits the deceleration of the vehicle to a predetermined minimum, such as the level road coast rate, to reduce driver perception of the final stages of deceleration, as will be described. This function is used in mode 2 control when deceleration is carefully controlled, and therefore is deactivated here.

Next, the routine proceeds to step 84, where the desired deceleration value A_{D} is cleared. This value is used as the commanded deceleration value in mode 2 only, and therefore is otherwise deactivated. A sub-routine is then executed at step 86 to revise, if necessary, the desired vehicle travelling speed on the basis of the detected preceding vehicle. It should be noted, as will be detailed later, that the determined revised speed will be limited to a speed less than the driver set speed V_{SET}.

Upon completing the revised speed determination at step 86, the brakes active flag is cleared at step 100. The routine then proceeds to step 102, where the interrupt used to trigger operation of this routine is re-enabled. Next, the routine returns to the background loop of Figure 3, via step 104.

Returning to step 68, if the actual range RNG_{A} does not exceed the sum of the desired range RNG_{D} and the hysteresis factor δ_{HYST}, or if the routine has just executed steps 60 and 64, the routine proceeds to step 72, where the minimum deceleration function active flag MIN_{D} is checked. MIN_{D} is activated whenever a deceleration value A_{D} is calculated that exceeds a predetermined minimum value A_{MIN}, such that A_{D} will then be limited by the lower limit A_{MIN}. In general, the vehicle will be decelerated at A_{D}, which will continue to decrease in magnitude as Vₒ approaches V_{T}, on the basis of the objectives of mode 2 control, until A_{D} equals or is less than A_{MIN}. The vehicle deceleration will then remain at A_{MIN} until the actual range between the two vehicles 10, 12 approximately equals the desired range RNG_{D}.

In this embodiment, A_{MIN} is the predetermined level road coasting rate of the vehicle, which may be determined off-line in a vehicle calibration process. The level road coasting rate of the vehicle is a desirable deceleration value in the context of this embodiment, as it has been determined to be a deceleration value that is relatively comfortable to the driver in relation to other deceleration values.

Specifically, at step 72, if MIN_{D} is active, the routine proceeds to step 74, where A_{D} is compared to A_{MIN}. A_{D} is limited to A_{MIN} at step 76 if it is below A_{MIN}. After checking this limit at step 74, and if necessary, after limiting A_{D} at step 76, the routine proceeds to step 88, where a closed loop deceleration sub-routine is executed. This deceleration sub-routine attempts, using vehicle brakes, to cause the actual deceleration rate Aₒ to equal the desired deceleration rate A_{D}. After executing this sub-routine, the speed control interrupt that initiates the routine of Figure 4 is enabled at step 102. The routine then returns to the background loop of Figure 3 via step 104.

Returning to step 72, if the minimum deceleration function MIN_{D} is not active, the routine proceeds to step 78, where A_{D} is compared to the minimum deceleration value A_{MIN}. If A_{D} exceeds A_{MIN}, the minimum deceleration function is activated at step 80, such that A_{D} will, in prospective iterations of this routine, be limited to values greater than or equal to A_{MIN}. The routine then proceeds to step 88, where the closed loop deceleration control sub-routine is executed, as described above.

If, at step 78, A_{D} is already less than or equal to A_{MIN}, the minimum deceleration function is not enabled, and the routine proceeds to step 88 directly. In this case the vehicle is being controlled according to relatively subtle deceleration values, i.e. values lower than A_{MIN}, such that it is not considered desirable to limit deceleration to the higher A_{MIN} value.

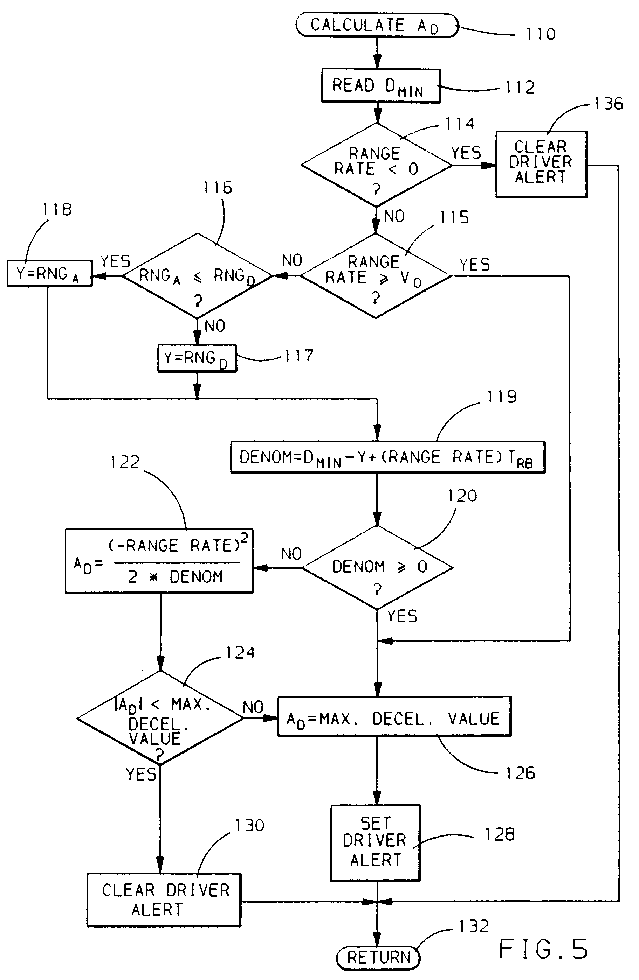

The specific steps required to calculate A_{D} in step 59 of the main speed control routine illustrated in Figure 4, is illustrated in Figure 5, and is entered at step 110. This sub-routine iteratively calculates A_{D}, subject to the final condition that when A_{D} is substantially zero, RNG_{A} should be approximately equal to a predetermined minimum range D_{MIN} pre-set by the driver, and Vₒ and V_{T} should be substantially the same.

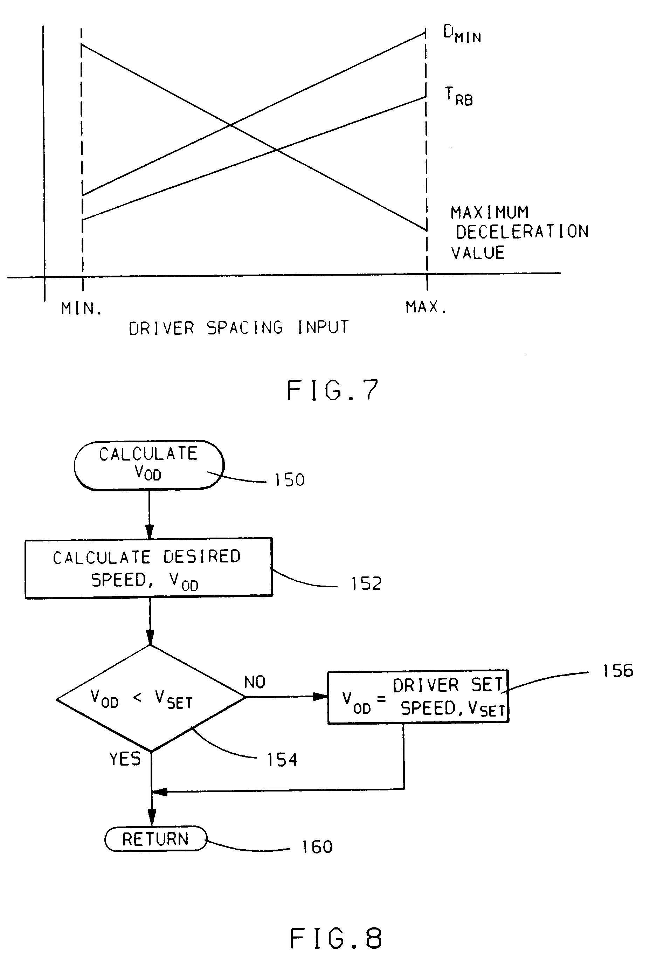

Specifically, the routine proceeds from step 110 to step 112, where D_{MIN} is read. In this embodiment, the driver may, according to his preferred driving style, set a "spacing input", illustrated in Figure 7. This input may be set by the driver using a conventional dial in proximity to the instrument panel of the vehicle. The dial set position (the driver spacing input) is directly proportional to D_{MIN}, and to a braking reaction time T_{RB}, and is inversely proportional to a maximum deceleration value.

After reading D_{MIN} from the spacing input, the routine proceeds to step 114, where the rate at which RNG_{A} is changing is examined. If it is less than zero, meaning that the controlled vehicle 10 is moving away from the preceding vehicle 12, there is no need to calculate A_{D}, which is only used when the controlled vehicle 10 is closing in on the preceding vehicle 12.

Accordingly, if rate of change of RNG_{A} is less than zero, the routine proceeds to step 136, where any previously set driver alerts are cleared. The driver alert may include an audible or a visual indication to warn the driver that a situation exists or is developing that warrants the driver's attention, such as a situation in which the maximum allowable deceleration would have to be exceeded. After clearing any active alerts at step 136, the routine proceeds to step 132, where it returns to step 59 of the routine illustrated in Figure 4.

Returning to step 114, if the rate of change in RNG_{A} (the "range rate") is greater than or equal to zero, the routine proceeds to step 115, where the rate of change is compared to the present vehicle velocity Vₒ. In this embodiment, if rate of change exceeds or is equal to Vₒ, it is determined that the deceleration required to meet the final conditions of mode 2 may exceed the maximum allowable deceleration value.

In such a case, the desired deceleration value is set to the maximum available value at step 126, and the routine proceeds to step 128, where the driver is alerted of the potential problem. This alert may include an aural and visual warning of conventional form, for example illumination of a warning light in proximity to the instrument panel, and activation of an aural tone of substantial amplitude to be heard readily by the driver. The routine then, at step 132, returns to step 59 of the routine illustrated in Figure 4.

Alternatively, if at step 115, the rate of change is less than Vₒ, the routine moves to step 116, where the actual range RNG_{A} is compared to the desired range RNG_{D}. Steps 116 to 118 make a substitution necessary to allow calculation of A_{D} in mode 1 or in mode 2. If in mode 1, these steps substitute RNG_{D} into the equation for calculation of the desired deceleration value A_{D}. RNG_{D} is required for the deceleration value calculation while in mode 1 because RNG_{D} is the range at which the vehicle deceleration will start to be controlled on the basis of A_{D}. The value of A_{D}, once calculated using RNG_{D} in this manner, can be checked against the system limits to verify that the final conditions can be met. If they cannot be met, an alarm is activated, warning the driver of the prospective problem.

However, if control is in mode 2, the actual range of the controlled vehicle 10 will be used in the A_{D} calculation, as it is in that range that control on the basis of A_{D} will be attempted. Accordingly, if the calculated value of A_{D} necessary to meet the predetermined final conditions exceeds the maximum allowable deceleration, an alarm is activated.

Specifically, at step 116, if RNG_{A} is greater than RNG_{D}, indicating that control may be in mode 1, the routine proceeds to step 117 and sets a dummy variable Y to RNG_{D}, such that RNG_{D} will be used in the calculation of A_{D}. Alternatively, at step 116, if RNG_{A} is less than or equal to RNG_{D}, indicating that control is in mode 2, the routine proceeds to step 118, where Y is set to RNG_{A}, such that RNG_{A} will be used in the calculation of A_{D}.

After determining the value to be assigned to Y via steps 116 through 118, the routine proceeds to step 119, to determine the denominator DENOM of the expression used to calculate A_{D}, on the basis of the following expression${\text{DENOM = D}}_{\text{MIN}} {\text{- Y + (Range Rate) * T}}_{\text{RB}}$ where T_{RB} is the driver influenced brake reaction time, and D_{MIN} is the driver influenced minimum allowable range. The driver influences both of these parameters via the driver spacing input.

T_{RB} is a setting pertaining to the desired responsiveness of the vehicle braking system. It is directly proportional to the driver spacing input, such that the higher the spacing input, the larger the braking reaction time in response to a determined need for braking. In this manner, a driver may influence how quickly his brakes react in situations requiring automatic braking.

Next, at step 120, DENOM is compared to zero. The denominator provides information concerning the capability of the system to decelerate the vehicle so as to satisfy the predetermined final conditions. This may be seen by rearranging the inequality illustrated in step 120 as follows${\text{Y <= D}}_{\text{MIN}} {\text{+ (Range Rate) * T}}_{\text{RB}}$ This inequality, if it holds, illustrates that, in the context of the driver programmed braking reaction time T_{RB}, and with the present difference in speeds between the vehicles, the actual range of the controlled vehicle 10 will become less than D_{MIN}, despite the largest available deceleration value. In this case, the driver must be notified of the potential problem.

Accordingly, if DENOM is greater than or equal to zero, the routine proceeds to step 126, where the desired deceleration value A_{D} is set to the maximum deceleration value. The routine then proceeds to step 128, where the driver is warned of a potential problem by a suitable warning device. The routine then proceeds to step 132, where it returns to step 59 of the routine illustrated in Figure 4.

Returning to step 120, if DENOM is less than zero, a deceleration value may be available such that the controlled vehicle can be decelerated to a speed which is less than or equal to the preceding vehicle speed before the actual distance RNG_{A} between the two vehicles 10, 12 becomes less than D_{MIN}. Accordingly, the routine proceeds to step 122, where the deceleration value A_{D} is calculated on the basis of the following equation${\text{A}}_{\text{D}} {\text{= (-RANGE RATE)}}^{\text{2}} \text{/(2 * DENOM).}$ This deceleration value is based on boundary conditions largely controlled by the driver, via the described "spacing input". With this input, the driver influences the minimum following distance, braking reaction time, and maximum deceleration value in a manner consistent with his preferred driving style.

Generally, the constraints within which A_{D} is calculated are the desire not to fall within D_{MIN}, tempered with the braking reaction time and the maximum deceleration value. Accordingly, A_{D} is calculated on the basis of the equation illustrated at step 122, such that when RNG_{A} is substantially equal to D_{MIN}, the velocity of the two vehicles 10, 12 will be approximately the same, such that the controlled vehicle 10 is no longer closing on the preceding vehicle 12. Additionally, A_{D} is limited by a driver influenced maximum deceleration value, to ensure a deceleration is not imparted to the vehicle 10 which is too uncomfortable to the driver.

Once the vehicle deceleration A_{D} is reduced to a value less than or equal to the predetermined minimum deceleration value A_{MIN}, assuming A_{D} started at a magnitude above A_{MIN}, it is maintained at A_{MIN} until the actual range RNG_{A} is substantially equal to the desired range RNG_{D}.

Specifically, upon calculating A_{D} at step 122, the routine proceeds to step 124, where the absolute value of A_{D} is compared to the driver influenced maximum deceleration value. If A_{D} exceeds this maximum, it is limited to the maximum value at step 126. The routine then proceeds to step 128, where the driver is warned of the exceeding of the maximum deceleration value via the described aural and visual alerts. The routine then proceeds to step 132, where it returns to step 59 of the routine illustrated in Figure 4.

Alternatively, if the absolute value of A_{D} does not exceed the maximum allowed deceleration value at step 124, the routine proceeds to step 130, where any previous driver alerts are cleared. The clearing of the alert indicates that the predetermined final condition may be satisfied without exceeding the maximum deceleration value. Next, the routine proceeds to step 132, where it returns to step 59 of the routine illustrated in Figure 4.

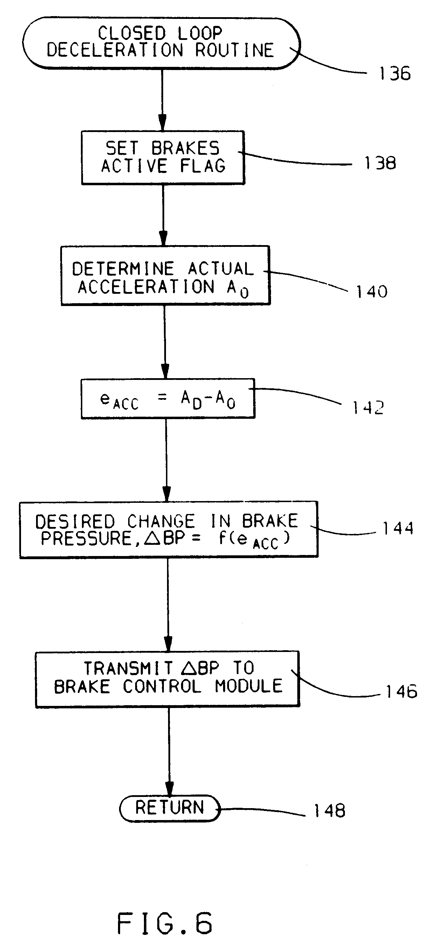

The specific closed loop deceleration control sub-routine used in step 88 of the routine illustrated in Figure 4, is depicted in Figure 6, and starts at step 136. The sub-routine proceeds to step 138, where the brakes active flag is set, indicating that braking will be required to achieve the desired deceleration. Next, the sub-routine proceeds to step 140, where the present deceleration Aₒ of the controlled vehicle 10 is determined. This value may be determined using a conventional vehicle speed signal and calculating the rate that signal changes over a predetermined time period.

Next, at step 142, the deceleration error e_{ACC} is generated as the simple difference between A_{D} and Aₒ. The sub-routine then moves to step 144, where a desired change in brake pressure ΔBP is calculated as a function of e_{ACC}. ΔBP is determined as the change in brake pressure necessary to reduce the difference between A_{D} and Aₒ substantially to zero in an expedient manner.

This pressure change is then, at step 146, transmitted to a conventional brake control module 30, such as a traction controller. The brake control module 30 generally adds ΔBP to or, in the appropriate case, subtracts ΔBP from any existing commanded brake pressure, thus altering vehicle deceleration in a manner consistent with reaching the desired deceleration value A_{D}. The iterative nature of the routine, by repeatedly revising ΔBP such that Aₒ approaches A_{D}, provides a means of closed loop deceleration control based on A_{D}.

After communicating the change in brake pressure to the brake control module 30, the sub-routine proceeds to step 148, where it returns to step 102 of the routine illustrated in Figure 4.

In this embodiment, the closed loop deceleration sub-routine illustrated in Figure 6 may be executed in a manner other than via step 88 of the routine illustrated in Figure 4. A dedicated processor interrupt is used in this embodiment to initiate the closed loop deceleration routine at an execution rate exceeding the 125 milliseconds execution rate of the routine of Figure 4. Specifically, in this embodiment the sub-routine of Figure 6 is executed twice by the dedicated interrupt for every one time it is executed by the routine call from step 88 of Figure 4. In this manner, for a calculated value of A_{D}, several deceleration iterations by the routine of Figure 6 may be executed in an attempt to eliminate the deceleration error e_{ACC}. By increasing the iteration rate of the sub-routine of Figure 6, the smoothness and overall responsiveness of the braking control is improved, so as to control vehicle speed in an unobtrusive manner.

Returning to step 86 of the routine illustrated in Figure 4, if the control is in mode 1, i.e. if the actual range exceeds the desired range between the vehicles 10, 12, it is necessary to determine a desired travelling speed for the controlled vehicle 10. This determination takes place in the sub-routine called from step 86 of the routine illustrated in Figure 4, and starts at step 150 of the sub-routine illustrated in Figure 8.

The sub-routine proceeds to step 152, where the desired vehicle speed V_{OD} is ascertained. V_{OD} may be determined in any conventional manner, for example by basing the controlled vehicle speed on the periodically updated sensed speed of the preceding vehicle 12. However, it is contemplated that this determination can include any means of providing a speed which minimizes the magnitude of the difference between desired range RNG_{D} and actual range RNG_{A}, in a manner that places high importance on minimizing the obtrusiveness of the speed control.

Upon calculation of V_{OD}, the sub-routine proceeds to step 154, where V_{OD} is compared to the cruise control set speed V_{SET}, as set by the driver upon activation of the cruise control. Understanding that the driver alone can increase the travelling speed of his vehicle above his original set speed, and that the described routine simply deals with situations that enquire as to whether the vehicle speed may be reduced below the driver's set speed, V_{OD} will be limited to values below the driver's set speed.

Accordingly, if V_{OD} exceeds V_{SET} at step 154, it will be limited to V_{SET} at step 156. The sub-routine then, via step 160, returns to step 100 of the routine illustrated in Figure 4. Alternatively, if V_{OD} does not exceed V_{SET}, the sub-routine proceeds from step 154 to step 160 directly, after which it returns to step 100 of the routine illustrated in Figure 4. The cruise control, upon receiving V_{OD}, may control vehicle speed on the basis of V_{OD} in any conventional manner.

## Claims

1. A method of controlling the speed of a controlled vehicle comprising the steps of sensing (54) the presence of a preceding vehicle (12) or other object in the path of the controlled vehicle (10); sensing (52) the actual spacing (RNG_{A}) between the controlled vehicle and the preceding vehicle or other object when a preceding vehicle or other object is determined to be present; ascertaining (58) a desired spacing (RNG_{D}) between the controlled vehicle and the preceding vehicle or other object; controlling the speed of the controlled vehicle on the basis of a first speed control mode (MODE 1) when the actual spacing exceeds the desired spacing; and controlling (88) the speed of the controlled vehicle on the basis of a second speed control mode (MODE 2) when the actual spacing is less than the desired spacing; characterised by sensing (52) the relative speed between the controlled vehicle and the preceding vehicle or other object; obtaining (112) a predetermined minimum allowable spacing (D_{MIN}) which is less than the desired spacing; and in that the second speed control mode includes the steps of (a) calculating (136) a vehicle deceleration value (A_{O}) by which to decelerate the controlled vehicle, the deceleration value being calculated such that as the actual spacing approaches the minimum allowable spacing, the relative speed between the controlled vehicle and the preceding vehicle or other object approaches zero, and the calculated deceleration value approaches zero; (b) decelerating the controlled vehicle on the basis of the calculated deceleration value; (c) decelerating the controlled vehicle at a predetermined deceleration value (A_{MIN}) when the calculated deceleration value decreases to a value less than or equal to the predetermined deceleration value; and (d) maintaining the controlled vehicle deceleration at the predetermined deceleration value until the actual spacing exceeds the desired spacing.

2. A method according to Claim 1, wherein the step of controlling vehicle speed on the basis of the first speed control mode (MODE 1) comprises the steps of determining (152) a desired speed (V_{OD}) of the controlled vehicle (10) on the basis of the speed (V_{T}) of the preceding vehicle (12) or other object and on the desired spacing (R_{NGD}), and controlling (154) the speed (V_{O}) of the controlled vehicle so as to minimise the difference between the desired speed (V_{OD}) and the actual speed (V_{O}) of the controlled vehicle when the desired speed is less than a driver set speed (V_{SET}).

3. A method according to Claim 1 or Claim 2, wherein the step (112) of obtaining a predetermined minimum allowable spacing (D_{MIN}) comprises the steps of reading a driver-set input indicative of a driver's preferred driving style; and determining the predetermined minimum allowable spacing (D_{MIN}) on the basis of the driver-set input.

4. A method according to any one of Claims 1 to 3, wherein the step of controlling vehicle speed on the basis of the first or second speed control mode (MODE 1, MODE 2) comprises the steps of reading a driver-set input indicative of a driver's preferred driving style; determining (59) a maximum tolerable vehicle deceleration (A_{D}) on the basis of the driver-set input; comparing the calculated deceleration (A_{O}) to the maximum tolerable vehicle deceleration; limiting the deceleration of the controlled vehicle (10) to the maximum tolerable vehicle deceleration when the calculated deceleration exceeds the maximum tolerable deceleration; and generating (128) a warning when the calculated deceleration exceeds the maximum tolerable vehicle deceleration.

5. A method according to any one of Claims 1 to 4, wherein the step of controlling vehicle speed on the basis of the second speed control mode (MODE 2) comprises the steps of reading a driver-set input indicative of a driver's preferred driving style; determining a desired braking reaction time (T_{RB}) on the basis of the driver-set input; and adjusting (142) the calculated deceleration (A_{O}) on the basis of the desired braking reaction time.

6. A method according to any one of Claims 1 to 5, comprising the additional step of controlling the speed of the controlled vehicle (10) on the basis of a third speed control mode in the absence of a preceding vehicle (12) or other object, the third speed control mode including the steps of sensing (50) a driver-set speed (V_{SET}) set by the driver as the desired speed of the controlled vehicle, and controlling the speed of the controlled vehicle so as to minimise the difference between the driver-set speed and the actual speed (V_{O}) of the controlled vehicle.

## Patentansprüche

1. Ein Verfahren zum Regeln der Geschwindigkeit eines geregelten Fahrzeugs, das die Schritte umfaßt, daß die Gegenwart eines vorhergehenden Fahrzeugs (12) oder anderen Objektes in der Bahn des geregelten Fahrzeugs (10) erfaßt wird (54); der tatsächliche Abstand (RNG_{A}) zwischen dem geregelten Fahrzeug und dem vorhergehenden Fahrzeug oder anderem Objekt erfaßt wird (52), wenn ein vorhergehendes Fahrzeug oder anderes Objekt als vorhanden zu sein bestimmt wird; ein gewünschter Abstand (RNG_{D}) zwischen dem geregelten Fahrzeug und dem vorhergehenden Fahrzeug oder anderen Objekt sichergestellt wird (58); die Geschwindigkeit des geregelten Fahrzeugs auf der Grundlage eines ersten Geschwindigkeitsregelmodus (MODUS 1) geregelt wird, wenn der tatsächliche Abstand den gewünschten Abstand überschreitet; und die Geschwindigkeit des geregelten Fahrzeugs auf der Grundlage eines zweiten Geschwindigkeitsregelmodus (MODUS 2) geregelt wird (88), wenn der tatsächliche Abstand kleiner als der gewünschte Abstand ist; dadurch gekennzeichnet, daß die relative Geschwindigkeit zwischen dem geregelten Fahrzeug und dem vorhergehenden Fahrzeug oder anderen Objekt erfaßt wird (52); ein vorbestimmter minimaler erlaubbarer Abstand (D_{MIN}) erhalten wird (112), welcher kleiner als der gewünschte Abstand ist; und dadurch, daß der zweite Geschwindigkeitsregelmodus die Schritte umfaßt, daß (a) ein Fahrzeugverzögerungswert (A₀) berechnet wird (136), um welchen das geregelte Fahrzeug zu verzögern ist, wobei der Verzögerungswert derart berechnet wird, daß, wenn der tatsächliche Abstand sich dem minimal erlaubbaren Abstand nähert, die relative Geschwindigkeit zwischen dem geregelten Fahrzeug und dem vorhergehenden Fahrzeug oder anderem Objekt sich Null nähert, und der berechnete Verzögerungswert sich Null nähert; (b) das geregelte Fahrzeug auf der Grundlage des berechneten Verzögerungswertes verzögert wird; (c) das geregelte Fahrzeug mit einem vorbestimmten Verzögerungswert (A_{MIN}) verzögert wird, wenn der berechnete Verzögerungswert auf einen Wert kleiner als der oder gleich dem vorbestimmten Verzögerungswert abnimmt; und (d) die geregelte Fahrzeugverzögerung bei dem vorbestimmten Verzögerungswert gehalten wird, bis der tatsächliche Abstand den gewünschten Abstand überschreitet.

2. Ein Verfahren nach Anspruch 1, worin der Schritt des Regelns der Fahrzeuggeschwindigkeit auf der Grundlage des ersten Geschwindigkeitsregelmodus (MODUS 1) die Schritte umfaßt, daß eine gewünschte Geschwindigkeit (V_{OD}) des geregelten Fahrzeugs (10) auf der Grundlage der Geschwindigkeit (V_{T}) des vorhergehenden Fahrzeugs (12) oder anderen Objektes und des gewünschten Abstandes (R_{NGD}) bestimmt wird (152), und die Geschwindigkeit (V_{O}) des geregelten Fahrzeugs geregelt wird (154), um so die Differenz zwischen der gewünschten Geschwindigkeit (V_{OD}) und der tatsächlichen Geschwindigkeit (V_{O}) des geregelten Fahrzeugs zu minimieren, wenn die gewünschte Geschwindigkeit kleiner als eine fahrereingestellte Geschwindigkeit (V_{SET}) wird.

3. Ein Verfahren nach Anspruch 1 oder 2, worin der Schritt (112) des Erhaltens eines vorbestimmten minimal erlaubbaren Abstandes (D_{MIN}) die Schritte umfaßt, daß eine fahrereingestellte Eingabe indikativ für einen vom Fahrer bevorzugten Fahrstil gelesen wird; und der vorbestimmte minimal erlaubbare Abstand (D_{MIN}) auf der Grundlage der fahrereingestellten Eingabe bestimmt wird.

4. Ein Verfahren nach einem der Ansprüche 1 bis 3, worin der Schritt des Regelns der Fahrzeuggeschwindigkeit auf der Grundlage der ersten oder zweiten Geschwindigkeitsregelmoden (MODUS 1, MODUS 2) die Schritte umfaßt, daß eine fahrereingestellte Eingabe indikativ für einen bevorzugten Fahrstil des Fahrers gelesen wird; eine maximal tolerierbare Fahrzeugverzögerung (A_{D}) auf der Grundlage der fahrereingestellten Eingabe bestimmt wird (59); die berechnete Verzögerung (A₀) mit der maximal tolerierbaren Fahrzeugverzögerung verglichen wird; die Verzögerung des geregelten Fahrzeugs (10) auf die maximal tolerierbare Fahrzeugverzögerung begrenzt wird, wenn die berechnete Verzögerung die maximal tolerierbare Verzögerung überschreitet; und eine Warnung erzeugt wird (128), wenn die berechnete Verzögerung die maximal tolerierbare Fahrzeugverzögerung überschreitet.

5. Ein Verfahren nach einem der Ansprüche 1 bis 4, worin der Schritt des Regelns der Fahrzeuggeschwindigkeit auf der Grundlage des zweiten Geschwindigkeitsregelmodus (MODUS 2) die Schritte umfaßt, daß eine fahrereingestellte Eingabe indikativ für einen bevorzugten Fahrstil des Fahrers gelesen wird; eine gewünschte Bremsreaktionszeit (T_{RB}) auf der Grundlage der vom Fahrer eingestellten Eingabe bestimmt wird; und die berechnete Verzögerung (A₀) auf der Grundlage der gewünschten Bremsreaktionszeit eingestellt wird (142).

6. Ein Verfahren nach einem der Ansprüche 1 bis 5, das den zusätzlichen Schritt umfaßt, daß die Geschwindigkeit des geregelten Fahrzeugs (10) auf der Grundlage eines dritten Geschwindigkeitsregelmodus in der Abwesenheit eines vorhergehenden Fahrzeugs (12) oder anderen Objektes geregelt wird, wobei der dritte Geschwindigkeitsregelmodus die Schritte umfaßt, daß eine fahrereingestellte Geschwindigkeit (V_{SET}), die von dem Fahrer als die gewünschte Geschwindigkeit des geregelten Fahrzeugs eingestellt wird, erfaßt wird (50), und die Geschwindigkeit des geregelten Fahrzeugs geregelt wird, um so die Differenz zwischen der fahrereingestellten Geschwindigkeit und der tatsächlichen Geschwindigkeit (V₀) des geregelten Fahrzeugs zu minimieren.

## Revendications

1. Procédé pour commander la vitesse d'un véhicule commandé comprenant les étapes consistant à détecter (54) la présence d'un véhicule précédent (12) ou d'un autre objet sur le trajet du véhicule commandé (10) ; détecter (52) l'espacement réel (RNG_{A}) entre le véhicule commandé et le véhicule précédent ou un autre objet quand un véhicule précédent ou un autre objet est déterminé être présent ; déterminer (58) un espacement souhaité (RNG_{D}) entre le véhicule commandé et le véhicule précédent ou un autre objet ; commander la vitesse du véhicule commandé sur la base d'un premier mode de commande de vitesse (mode 1) quand l'espacement réel dépasse l'espacement souhaité ; et commander (88) la vitesse du véhicule commandé sur la base d'un deuxième mode de commande de vitesse (mode 2) quand l'espacement réel est inférieur à l'espacement souhaité ; caractérisé en ce qu'on détecte (52) la vitesse relative entre le véhicule commandé et le véhicule précédent ou un autre objet ; qu'on obtient (112) un espacement admissible minimal prédéterminé (D_{MIN}) qui est inférieur à l'espacement souhaité ; et en ce que le deuxième mode de commande de vitesse comprend les étapes consistant à (a) calculer (136) une valeur de décélération (Aₒ) de véhicule avec laquelle ralentir le véhicule commandé, la valeur de décélération étant calculée de sorte que quand l'espacement réel se rapproche de l'espacement admissible minimal, la vitesse relative entre le véhicule commandé et le véhicule précédent ou un autre objet se rapproche de zéro, et la valeur calculée de décélération se rapproche de zéro ; (b) ralentir le véhicule commandé sur la base de la valeur calculée de décélération ; (c) ralentir le véhicule commandé d'une valeur prédéterminée de décélération (A_{MIN}) quand la valeur calculée de décélération diminue jusqu'à une valeur inférieure ou égale à la valeur prédéterminée de décélération ; et (d) maintenir la décélération du véhicule commandé à la valeur prédéterminée de décélération jusqu'à ce que l'espacement réel dépasse l'espacement souhaité.

2. Procédé selon la revendication 1, dans lequel l'étape consistant à commander la vitesse du véhicule sur la base du premier mode de commande de vitesse (mode 1) comprend les étapes consistant à déterminer (152) une vitesse souhaitée (V_{OD}) du véhicule commandé sur la base de la vitesse (V_{T}) du véhicule précédent (12) ou de l'autre objet, et de l'espacement souhaité (RNG_{D}), et à commander (154) la vitesse (Vₒ) du véhicule commandé de manière à minimiser la différence entre la vitesse souhaitée (VOD) et la vitesse réelle (Vₒ) du véhicule commandé quand la vitesse souhaitée est inférieure à une vitesse fixée par le conducteur (V_{SET}).

3. Procédé selon la revendication 1 ou la revendication 2, dans lequel l'étape (112) consistant à obtenir un espacement admissible minimal prédéterminé (Dₘᵢₙ) comprend les étapes consistant à lire une entrée fixée par le conducteur indiquant un style préféré de conduite du conducteur ; et à déterminer l'espacement admissible minimal prédéterminé (Dₘᵢₙ) sur la base de l'entrée fixée par le conducteur.

4. Procédé selon l'une quelconque des revendications 1 à 3, dans lequel l'étape consistant à commander la vitesse du véhicule sur la base des premier ou deuxième modes de commande (mode 1, mode 2) comprend les étapes consistant à lire une entrée fixée par le conducteur indiquant un style préféré de conduite du conducteur ; déterminer (59) une décélération admissible maximale (A_{D}) du véhicule sur la base de l'entrée fixée par le conducteur ; comparer la décélération calculée (Aₒ) à la décélération admissible maximale du véhicule ; limiter la décélération du véhicule commandé (10) à la décélération admissible maximale quand la décélération calculée dépasse la décélération admissible maximale ; et émettre (128) un avertissement quand la décélération calculée dépasse la décélération admissible maximale du véhicule.

5. Procédé selon l'une quelconque des revendications 1 à 4, dans lequel l'étape consistant à commander la vitesse du véhicule sur la base du deuxième mode de commande (mode 2) comprend les étapes consistant à lire une entrée fixée par le conducteur indiquant un style préféré de conduite du conducteur ; déterminer un temps souhaité de réaction de freinage (T_{RB}) sur la base de l'entrée fixée par le conducteur ; et ajuster (142) la décélération calculée (Aₒ) sur la base du temps souhaité de réaction de freinage.

6. Procédé selon l'une quelconque des revendications 1 à 5, comprenant l'étape supplémentaire consistant à commander la vitesse du véhicule commandé (10) sur la base d'un troisième mode de commande de vitesse en l'absence d'un véhicule précédent (12) ou d'un autre objet, le troisième mode de commande de vitesse comprenant les étapes consistant à détecter (50) une vitesse fixée par le conducteur (V_{SET}) déterminée par le conducteur comme vitesse souhaitée du véhicule commandé, et commander la vitesse du véhicule commandé de manière à minimiser la différence entre la vitesse fixée par le conducteur et la vitesse réelle (Vₒ) du véhicule commandé.
